# EUROPEAN PATENT SPECIFICATION

(11) **EP 1 285 619 B1**
(45) Date of publication and mention of the grant of the patent: **15.02.2006**
(21) Application number: 02015134.6
(22) Date of filing: 06.07.2002
(51) Int. Cl.: A47J 42/34

(54) **Peppercorn crusher**
Pfeffermühle
Broyeur à poivre

(30) Priority: 16.08.2001 CN 01233474
(43) Date of publication of application: 26.02.2003
(73) Proprietor: Wong, Yan Kwong, Kowloon Bay, Kowloo (HK)
(72) Inventor: Wong, Yan Kwong, Unit 1016-17, 10/F., Kowloon Bay, Kowloo (HK)
(74) Representative: Valentin, Ekkehard

(56) References cited:
- WO-A-84/00484
- CH-A- 225 319
- US-A- 1 481 632
- US-A- 4 374 574
- US-A- 5 730 374

## Description

### FIELD OF THE INVENTION

The invention relates to a crusher, in particular to a peppercorn crusher (pepper mill).

### BACKGROUND OF THE INVENTION

At present the construction of peppercorn crusher in application appears in the form of a long cylinder, usually consisted of a cylindrical body and a top cover. During operation, the user must hold the cylindrical body with one hand, and turn the cover in 360° with another hand pressing and wresting, so as to crush the peppercorn by a crushing plate positioned under the top cover. Although such design was applied in the market for a period of time, but such peppercorn crusher has following apparent drawbacks:
1. Both hands are required at the same time to cooperate for manipulation, inconvenient in application and especially not applicable for the crippled.
2. Greater strength is needed to press and wrist the top cover, hence it is not suitable for weak people.
3. Fineness of crushed peppercorn is decided by the strength exerted by hand on the top cover, and it depends on the feeling of hand. Thus it is often impossible to obtain the crushed peppercorn with required fineness, and fineness of crushed peppercorn will be uneven in the same operation.

CH 225 319 discloses a peppercorn crusher, comprising: a main body; a top cover disposed on top of the main body and having a tail end with stuck up part.; a crushing plate; a handle pivotally mounted on the main body, the handle having a curved piece on a top thereof; gear driving mechanism being cooperating with crushing plate (14); fineness control mechanism being linked with the crushing plate; a spring bow mounted on the handle; and a plate on which the spring bow presses. In operation, the user grasps the handle and the tail end of the top cover and pulls the handle so as to rotate and press the gear onto the crusher. With this construction, it needs greater force to be applied to the handle and it is inconvenient in operation.

### SUMMARY OF THE INVENTION

In view of above said problems, the object of the invention is to provide a peppercorn crusher, which can be operated easily with single hand and control fineness of crushed peppercorn.

To achieve the above object, the invention provides a peppercorn crusher, comprising: a main body; a top cover disposed on top of said main body; a crushing plate provided within said main body; a handle pivotally mounted on said main body, said handle having a curved piece on a top thereof; gear driving mechanism provided within said main body, said gear driving mechanism being cooperating with crushing plate; fineness control mechanism provided within said main body, said fineness control mechanism being linked with said crushing plate; and a spring bow mounted on said handle; characterized in that, a Bakelite plate with a semi-circular wall is disposed within said main body, said spring bow presses on the semi-circular wall of said Bakelite plate; said gear-driving mechanism is consists of a driving gear, a pinion and a big gear, wherein said driving gear is connected to a cylindrical shaft of said handle, said pinion and big gear are mounted coaxially, said driving gear is engaged with said pinion, and said pinion is engaged with said big gear, and said big gear works in cooperation with said crushing plate.

Moreover, on the back of crushing plate is preferably provided with a protrusion. Fineness control mechanism consists of control plate and knob, wherein head of knob is embedded in the main body and at position adjacent to its end is disposed a cam-shaped Bakelite plate. For said knob is also provided a cylinder joined with Bakelite plate and an eccentric shaft mounted on the cylinder with offset. At one end of control plate is provided an elliptic hole and at other end is provided a protruded portion, which engages the protrusion provided on the back of crushing plate. The cylinder of knob is passed into the elliptic hole of control plate, and the eccentric shaft is mounted in the appointed position on main body.

Comparing with current technique, on account of the unique construction of the peppercorn crusher of the invention, in application of above said peppercorn crusher the user could operate with one hand to crush peppercorn. Moreover, in application of the invention the entire crushing process is driven by means of gear-driving mechanism, therefore user could easily crush peppercorn at expense of very little strength. On the other hand, gear-driving mechanism and crushing plate as a whole could be pre-assembled within a case, which is then placed into main body, so that it can be adapted to various shapes of body. In addition, a fineness control mechanism is provided in the the invention, and hence fineness of crushed peppercorn could be controlled. In general, the peppercorn crusher of the invention is not only convenient in application, but also timesaving and laborsaving.

### BRIEF DESCRIPTION OF THE DRAWINGS

With reference to description of the following drawings of preferred embodiment the invention would be better understood:
Fig. 1 is a sectional view of a preferred embodiment of the peppercorn crusher of the invention;
Fig. 2 is a sectional view of the preferred embodiment in which the handle is pulled toward main body;
Fig. 3 is a perspective view of pinion and big gear;
Fig. 4 is a perspective view of knob for adjustment of control plate;
Fig. 5 is a schematic installation view of handle and Bakelite plate;
Fig. 6 is an exploded schematic view of crushing plate and fineness control mechanism.

### DESCRIPTION OF THE PREFERRED EMBODIMENT

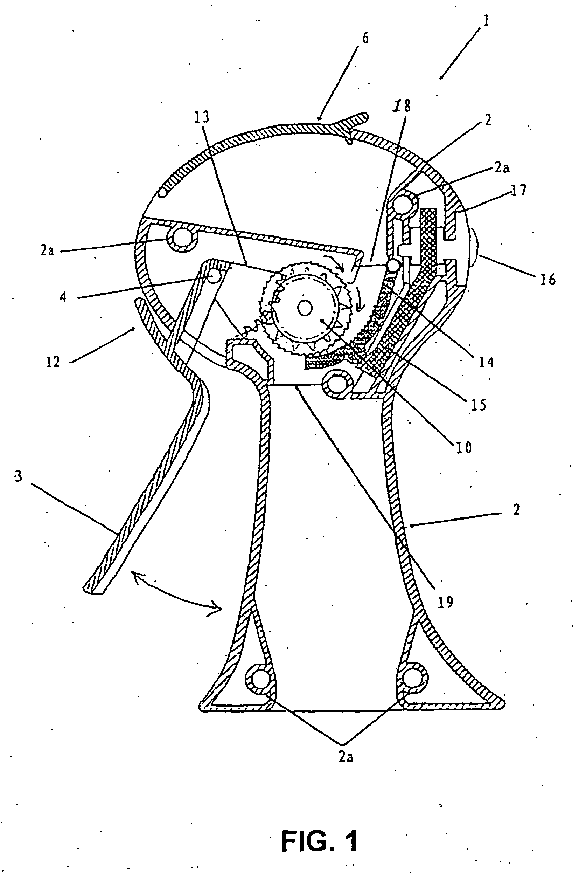

Firstly, Fig. 1 shows a sectional view of an embodiment of the peppercorn crusher 1 of the invention. Said peppercorn crusher 1 comprises a main body 2 and a handle 3 pivotally mounted on said main body. Said main body 2 consists of two identical halves of body, which are fixed together by means of fasteners such as screws etc. For the sake of clarity, the figure only shows one half of the body, in which the inner machine parts of said peppercorn crusher are mainly installed. In said peppercorn crusher at same time has mounting position 2a for installation of these fasteners. Handle 3 has a cylindrical pin 4 passing through its upper end, and the two ends of said cylindrical pin are accommodated in the appointed position of main body 2 (not shown in figure), so that handle 3 is pivotally fixed on main body. In addition, a spring bow 5 is provided on handle 3, and said spring bow could make handle 3 restoring to its initial position after being pulled toward main body 2.

On the top of main body 2 is provided a top cover 6 capable to be swung up. With thumb pressing on the stuck-up part of tail end of said top cover, said top cover will swing up and peppercorn to be crushed could be filled into inner chamber of crusher. At the middle of upper half part of main body 2 is provided a hollow cylinder, the peripheral of which could just sleeved on a spring (not shown), and in the hollow portion of said cylinder is inserted a cylindrical shaft 8, used for mounting of pinion 9 and big gear 10. The two ends of said cylindrical shaft are accommodated in appointed position (not shown) of main body 2, so that pinion 9 and big gear 10 could be rotationally fixed in suitable position.

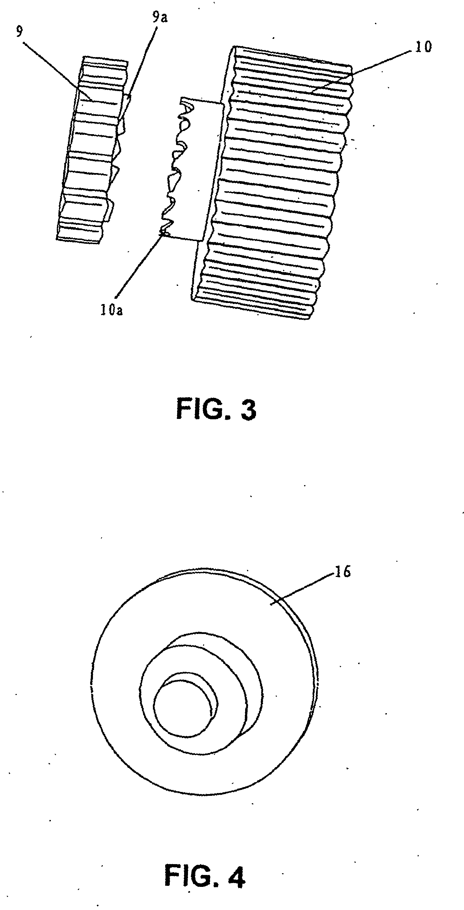

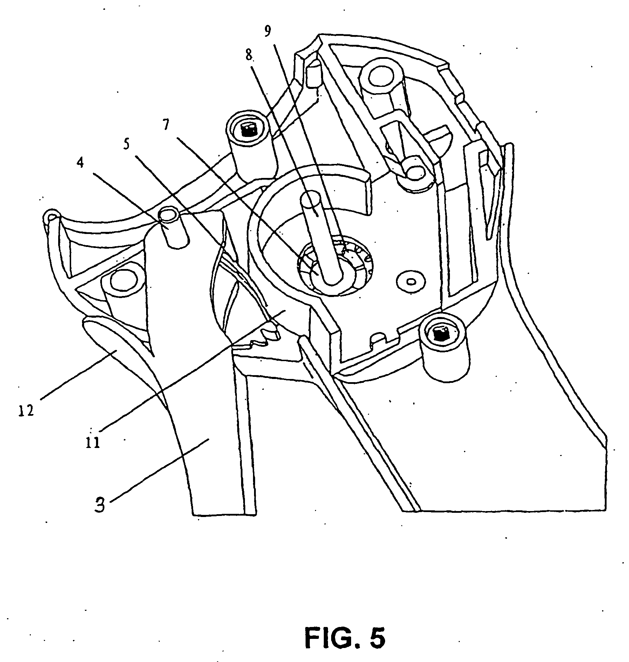

As shown Fig. 3, pinion 9 has two end faces, in which one is flat and smooth, and the other face has a plurality (4 in said embodiment) of protruding teeth (not shown) with 450 inclined side surface. During installation of pinion, cylindrical pin is passed through central hole of pinion, and at this time the face with protruded teeth must be set upwards, while the other smooth face is abut to the spring sleeved on the peripheral of hollow cylinder 7, so that said pinion is pressed against the spring. As shown in Fig. 5, after installation of pinion 9, Bakelite plate 11 with semi- circular wall is to be installed. On the bottom of said Bakelite plate is provided a plurality (3 in said embodiment) of protruded portions, which could be inserted into corresponding accommodating holes (not shown) in main body 2. After installation of Bakelite plate is completed, spring bow 5 of handle 3 would press against semi-circular wall of Bakelite plate 11, and handle 3 would get off in a direction leaving main body 2 due to outward pushing force of spring bow 5. In order to prevent the handle pushed out of original position, above handle is provided a curved piece 12, which would abut to outer wall of main body 2, when handle 3 is pushed to a certain position out of main body 2 due to bow 5. One end face of said big gear 10 is flat and smooth, and on other end face of gear 10 is provided a cylindrical portion, on which is arranged full of protruded teeth with 450 (not limited to 45O) inclined side surface. During installation of big gear 10, cylindrical portion must be downward, so that protruded teeth of said cylindrical portion would be engaged with protruded teeth of pinion 9.

On account of particular matching structure of cylindrical portion of big gear and protruding teeth of pinion 9, the two matching parts could only be engaged in one direction. That is to say, when pinion rotates clockwise to drive big gear, protruding teeth of cylindrical portion of big gear and protruding teeth of pinion 9 engages with each other, so that pinion can drive the big gear to rotate clockwise. But when pinion 9 rotates counter-clockwise, protruding teeth of pinion 9 no longer engages protruding teeth of cylindrical portion of big gear, but slips over the inclined sides of protruding teeth, and the big gear would not rotate with the counter-clockwise rotation of pinion and keeps on stationary.

On the cylindrical pin 4 of handle 3 is also a sector gear 13, which engages with pinion 9. When user pulls handle 3 to main body, said sector gear 13 would swing counter-clockwise with the pivoting of handle 3 to drive the pinion 9 rotating clockwise, and said pinion in turn drives big gear to rotate clockwise. Hence these three gears constitute gear-driving mechanism of the invention. In view of the invention utilizes two sets of gearing to drive entire crushing process, users can crush peppercorn without expense of great strength.

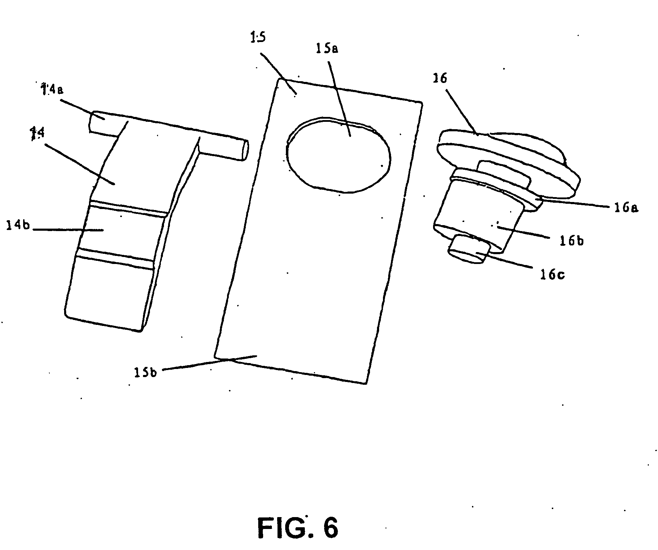

In addition, in the main body 2 is provided also an arc-shaped crushing plate 14 with serrations and a fineness control mechanism. As shown Fig. 6, said mechanism is constituted of fineness control plate 15 for control of fineness of crushed peppercorn and a knob 16 for adjustment of control plate. In main body 2 is provided a recess 17, which accommodates the head of knob 16 for turning operation of user. At one end of crushing plate 14 is disposed integrally two cylindrical pins 14a, which are accommodated in predetermined holes in main body 2, so that crushing plate could pivotally fixed at suitable position. Moreover, on the back of said crushing plate is provided semi-circular protrusion 14b. The front face (with serrations) of said crushing plate 14 presses on big gear 10 to crush peppercorn. Control plate 15 essentially shows as a wide "V" shape, at upper end of which is provided a elliptic hole (not shown), and at lower end of which is provided a 450 inclined protruded portion 15b, engaging the semi-circular protrusion 14b at back of crushing plate. As shown in Fig. 4, the configuration of knob 16 is such that near its end is provided a cam-like Bakelite disc 16a, function of which is to limit the rotation of knob by user to 5-1800 range by making said cam-like Bakelite piece abut on inner wall of main body, so as to prevent excessive turning of knob. Joined together with Bakelite piece 16a is cylindrical body 16b, which is smaller than elliptic hole 15a in control plate 15. At top of said cylindrical body 16b further disposed an eccentric shaft 16c, which is positioned offset to cylindrical body 16b. Cylindrical body 16b is inserted into elliptic hole 15a, and eccentric shaft 16c is installed at appointed position in main body 2.

On account of eccentric shaft 16c is offset to one side, when knob 16 is turned, said eccentric shaft would drive the cylindrical body 16b inserted in the elliptic hole 15a of control plate 15 to rotate along elliptic path, and cylindrical body 16b could move close to either of the upper and lower ends of elliptic hole 15a, so that control plate 15 is made to ascend or descend. Concretely speaking, when knob 16 is turned upward, cylindrical body 16b inserted in the elliptic hole 15a of control plate 15 would pull control plate 15 upward to upper end of elliptic hole 15a. Since control plate is pulled upward, 450 inclined protruded portion 15b at lower end of control plate 15 would press against semi-circular protrusion 14b positioned at back of crushing plate 14, so as to push crushing plate coming nearer to big gear making the gap between crushing plate 14 and big gear 10 becomes smaller, and peppercorn would be crushed finer. Contrarily, when knob 16 is turned in reverse direction, cylindrical body 16b would pull control plate 15 downward to lower end of elliptic hole 15a, i.e. pushing control plate 15 downward, so that protruded portion 15b would no more press against semi-circular protrusion 14b at back of crushing plate 14, and the gap between crushing plate 14 and big gear 10 becomes larger, pressure received by peppercorn would be smaller, and peppercorn would not be crushed very fine.

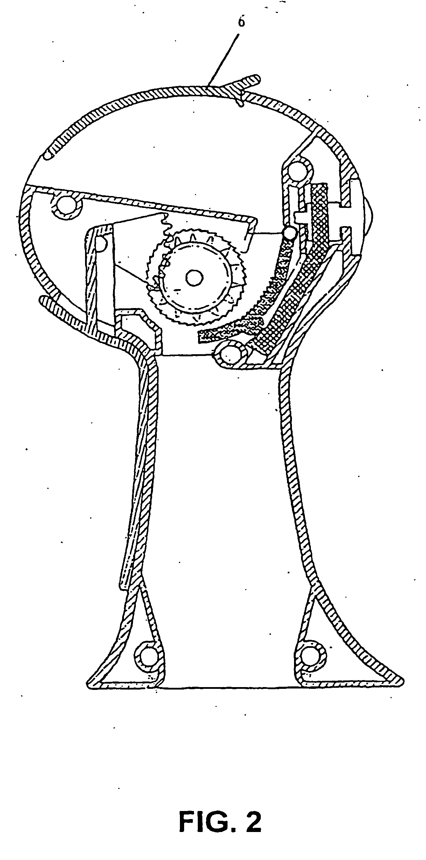

After understanding the construction of entire peppercorn crusher, the working principle of the peppercorn crusher of the invention would be described as follows. During application, user holds the peppercorn crusher with on one hand, and presses on the stuck-up part of tail end of top cover 6 with the thumb at first to swing up said top cover upward, and peppercorn to be crushed could be filled into inner chamber of crusher. Then peppercorn would fall into the gap between crushing plate 14 and big gear 10 through opening 18. User can set required fineness of crushed peppercorn beforehand by turning of knob 16. When user pulls handle toward main body manually, as shown in Fig. 2, clockwise pivotal rotation of handle 3 would drive sector-shaped gear 13 linked to handle to rotate counter-clockwise. Thereupon, said sector-shaped gear 13 would drive pinion 9 engaged with it to rotate clockwise, and owing to protruded teeth on pinion is engaged each other with protruded teeth on cylindrical part of big gear, the pinion could drive big gear to rotate also in clockwise direction, and peppercorn within the gap would be crushed, with the crushed peppercorn falling out through passage 19. Once the user leaves go of handle, as mentioned above, handle would restore to its original position through action of spring bow 5, and at the same time said handle would drive sector-shaped gear 13 return clockwise to its original position. Under driving action of sector-shaped gear, pinion 9 would also return counter-clockwise to its original position. But as mentioned before, at that time protruded teeth on pinion 9 no longer are engaged with protruded teeth on cylindrical part of big gear 10, the teeth slips on the inclined sides of protruded teeth of big gear 10. Hence big gear 10 would not rotate with counter-clockwise rotation of pinion, but keeps stationary, so that continuity and degree of pressure of crushing process is guaranteed.

Although the object, features of construction and effect of the invention are concretely described through a preferred embodiment in above, but a person skilled in the art would recognize that above embodiment is used only for description but not for limitation of the invention.

## Claims

1. A peppercorn crusher (1), comprising:
a main body (2);
a top cover (6) disposed on top of said main body (2);
a crushing plate (14) provided within said main body (2);
a handle (3) pivotally mounted on said main body (2), said handle (3) having a curved piece (12) on a top thereof;
gear driving mechanism provided within said main body (2), said gear driving mechanism being cooperating with crushing plate (14);
fineness control mechanism (16) provided within said main body (2), said fineness control mechanism being linked with said crushing plate (14); and
a spring bow (5) mounted on said handle (3);
**characterized in that**,
a Bakelite plate (11) with a semi-circular wall is disposed within said main body (2), said spring bow (5) presses on the semi-circular wall of said Bakelite plate (11);
said gear-driving mechanism (9, 10, 13) consists of a driving gear (13), a pinion (9) and a big gear (10), wherein said driving gear (13) is connected to a cylindrical shaft (8) of said handle (3), said pinion (9) and big gear (10) are mounted coaxially, said driving gear (13) is engaged with said pinion (9), and said pinion (9) is engaged with said big gear (10), and said big gear (10) works in cooperation with said crushing plate (14).

2. A peppercorn crusher (1) as defined in Claim 1, **characterized in that**, at the middle of upper half part of main body (2) is provided with a hollow cylinder (7), the peripheral of which is sleeved on a spring, in the hollow portion of said cylinder (7) is inserted a cylindrical shaft (8), said pinion (9) and big gear (10) are successively mounted on said cylindrical shaft (8), said pinion (9) is pressed against said spring.

3. A peppercorn crusher (1) as defined in Claim 1, **characterized in that**, on one end face of said pinion (9) are provided with a plurality of protruded teeth (9a), and on one end face of said big gear (10) are provided with protruded teeth (10a), said protruded teeth (9a) of former are engaged with said protruded teeth (10a) of latter only in one direction.

4. A peppercorn crusher (1) as defined in Claim 1, **characterized in that**, at back of said crushing plate (14) is provided a protrusion (14b); said fineness control mechanism comprises control plate (15) and knob (16); wherein head of said knob (16) is embedded in the main body (2) and at position adjacent to its end is disposed a cam-shaped Bakelite plate (16a), for said knob (16) is also provided a cylinder (16b) joined with Bakelite plate (16a) and an eccentric shaft (16c) mounted on the cylinder (16b) with offset; at one end of said control plate (15) is provided an elliptic hole (15a) and at other end is provided a protruded portion (15b), which engages the protrusion (14b) provided on the back of said crushing plate (14), said cylinder (16b) of knob (16) is passed into the elliptic hole (15a) of said control plate (15), and said eccentric shaft (16c) is mounted in the appointed position on main body (2).

5. A peppercorn crusher (1) as defined in Claim 1, **characterized in that**, said top cover (6) has a tail end with stuck-up part and can be swung up.

6. A peppercorn crusher (1) as defined in Claim 1, **characterized in that**, said main body (2) consists of two identical halves of body, which are fixed together by means of fasteners.

7. A peppercorn crusher (1) as defined in Claim 1, **characterized in that**, on the bottom of said Bakelite plate (11) is provided with a plurality of protruded portions (15b), which could be inserted into corresponding accommodating holes in main body (2).

8. A peppercorn crusher (1) as defined in Claim 1, **characterized in that**, said driving gear (13) is sector-shaped.

## Patentansprüche

1. Pfefferkörnzerkleinerer (1), umfassend
einen Hauptkörper (2);
eine obere Abdeckung (6), die auf dem Hauptkörper (2) angeordnet ist;
eine Zerkleinerungsplatte (14), die im Hauptkörper (2) bereitgestellt ist;
einen Griff (3), der schwenkbar am Hauptkörper (2) angebracht ist, wobei der Griff (3) an einer Oberseite davon ein gekrümmtes Stück (12) aufweist;
einen Zahnradantriebsmechanismus, der im Hauptkörper (2) bereitgestellt ist, wobei der Zahnradantriebsmechanismus mit der Zerkleinerungsplatte (14) zusammenwirkt;
einen Feinheitssteuerungsmechanismus (16), der im Hauptkörper (2) bereitgestellt ist, wobei der Feinheitssteuerungsmechanismus (16) mit der Zerkleinerungsplatte (14) gekoppelt ist; und
einen Federbogen (5), der am Griff (3) angebracht ist;
**dadurch gekennzeichnet, dass**
eine Bakelitplatte (11) mit einer halbkreisförmigen Wand im Hauptkörper (2) angeordnet ist, wobei der Federbogen (5) auf die halbkreisförmige Wand der Bakelitplatte (11) drückt;
der Zahnradantriebsmechanismus (9, 10, 13) aus einem Antriebsgetriebe (13), einem Ritzel (9) und einem großen Zahnrad (10) besteht, wobei das Antriebsgetriebe (13) mit einer zylinderförmigen Welle (8) des Griffs (3) verbunden ist, das Ritzel (9) und das große Zahnrad (10) koaxial angebracht sind, das Antriebsgetriebe (13) mit dem Ritzel (9) in Eingriff steht, und das Ritzel (9) mit dem großen Zahnrad (10) in Eingriff steht, und das große Zahnrad (10) in Zusammenwirkung mit der Zerkleinerungsplatte (14) arbeitet.

2. Pfefferkornzerkleinerer (1) nach Anspruch 1, **dadurch gekennzeichnet, dass** in der Mitte der oberen Hälfte des Hauptkörpers (2) ein hohler Zylinder (7) bereitgestellt ist, dessen Umfang auf eine Feder aufgesteckt ist, wobei eine zylinderförmige Welle (8) in den hohlen Abschnitt des Zylinders (7) eingesetzt ist, wobei das Ritzel (9) und das große Zahnrad (10) aufeinanderfolgend an der zylinderförmigen Welle (8) angebracht sind, wobei das Ritzel (9) gegen die Feder gedrückt wird.

3. Pfefferkornzerkleinerer (1) nach Anspruch 1, **dadurch gekennzeichnet, dass** eine Endfläche des Ritzels (9) mit mehreren vorspringenden Zähnen (9a) versehen ist, und eine Endfläche des großen Zahnrads (10) mit vorspringenden Zähnen (10a) versehen ist, wobei die vorspringenden Zähne (9a) des ersteren nur in einer Richtung mit den vorspringenden Zähnen (10a) des letzteren in Eingriff stehen.

4. Pfefferkornzerkleinerer (1) nach Anspruch 1, **dadurch gekennzeichnet, dass** an der Hinterseite der Zerkleinerungsplatte (14) ein Vorsprung (14b) bereitgestellt ist; der Feinheitssteuerungsmechanismus eine Steuerungsplatte (15) und einen Knopf (16) umfasst; wobei der Kopf des Knopfs (16) in den Hauptkörper (2) eingebettet ist und an einer Position neben seinem Ende eine nockenförmige Bakelitplatte (16a) angeordnet ist, für den Knopf (16) außerdem ein Zylinder (16b), der mit der Bakelitplatte (16a) verbunden ist, und eine exzentrische Welle (16c), die mit einem Versatz am Zylinder (16b) angebracht ist, bereitgestellt sind; an einem Ende der Steuerungsplatte (15) eine elliptische Öffnung (15a) bereitgestellt ist, und am anderen Ende ein vorspringender Abschnitt (15b) bereitgestellt ist, der mit dem an der Hinterseite der Zerkleinerungsplatte (14) bereitgestellten Vorsprung (14b) eingreift, wobei der Zylinder (16b) des Knopfs (16) durch die elliptische Öffnung (15a) der Steuerungsplatte (15) geführt ist, und die exzentrische Welle (16c) in der festgesetzten Position am Hauptkörper (2) angebracht ist.

5. Pfefferkornzerkleinerer (1) nach Anspruch 1, **dadurch gekennzeichnet, dass** die obere Abdeckung (6) ein hinteres Ende mit einem hochstehenden Teil aufweist und aufwärts geschwungen werden kann.

6. Pfefferkornzerkleinerer (1) nach Anspruch 1, **dadurch gekennzeichnet, dass** der Hauptkörper (2) aus zwei identischen Körperhälften besteht, die durch Befestigungsmittel aneinander fixiert sind.

7. Pfefferkornzerkleinerer (1) nach Anspruch 1, **dadurch gekennzeichnet, dass** die Unterseite der Bakelitplatte (11) mit mehreren vorspringenden Abschnitten (15b) versehen ist, die in entsprechende Unterbringungslöcher im Hauptkörper (2) eingesetzt werden könnten.

8. Pfefferkornzerkleinerer (1) nach Anspruch 1, wobei das Antriebsgetriebe (13) kreissektorförmig ist.

## Revendications

1. Moulin à poivre (1) comprenant :
un corps principal (2);
un couvercle de dessus disposé sur le dessus dudit corps principal (2);
une plaque de broyage (14) disposée à l'intérieur dudit corps principal (2);
une manette (3) montée pivotante sur ledit corps principal (2), ladite manette (3) ayant une pièce incurvée (12) sur le dessus;
un mécanisme d'entraînement d'engrenage prévu dans ledit corps principal (2), ledit mécanisme d'entraînement d'engrenage coopérant avec la plaque de broyage (14);
un mécanisme de contrôle de finesse (16) prévu dans ledit corps (2), ledit mécanisme de contrôle de finesse étant relié à ladite plaque de broyage (14); et
un arc ressort (5) monté sur ladite poignée (3);
**caractérisé en ce qu'**
une plaque de bakélite (11) avec une paroi semi-circulaire est disposée à l'intérieur dudit corps principal (2), ledit arc ressort (5) est comprimé contre la paroi semi-circulaire de ladite plaque de bakélite (11);
ledit mécanisme d'entraînement (9, 10, 13) est constitué par un engrenage moteur (13), un pignon (9), un grand engrenage (10), ledit engrenage moteur (13) étant connecté à une tige cylindrique (8) de ladite manette (3), ledit pignon (9) et le grand engrenage (10) étant montés coaxialement , ledit engrenage moteur (13) étant en prise avec ledit pignon (9), et ledit pignon (9) étant engagé avec ledit grand engrenage (10) et ledit grand engrenage (10) coopèrant avec ladite plaque de broyage (14).

2. Moulin à poivre (1) tel que défini dans la revendication 1, **caractérisé en ce que** sur le milieu de la partie de moitié supérieure du cors principal (2) il est prévu un cylindre creux (7), dont la périphérie est enfilée sur un ressort, dans la portion creuse dudit cylindre (7) est insérée une tige cylindrique (8), ledit pignon (9) et le grand engrenage (10) étant montés sur ladite tige cylindrique (8), ledit pignon (9) étant pressé à nouveau contre ledit ressort.

3. Moulin à poivre (1) tel que défini dans la revendication 1, **caractérisé en ce qu'**une face d'extrémité dudit pignon (9) est munie d'une pluralité de dents protubérantes (9a) et une face d'extrémité dudit grand engrenage (10) sont munies de dents protubérantes (10a), lesdites dents protubérantes (9a) étant engagées avec lesdites dents protubérantes (10a) seulement dans une direction.

4. Moulin à poivre (1) tel que défini dans la revendication 1, **caractérisé en ce qu'**à l'arrière de ladite plaque de broyage (14), il est prévu une protubérance (14b), ledit mécanisme de contrôle de finesse comprend une plaque de contrôle (15) et un bouton (16); la tête dudit bouton (16) étant incorporée dans le corps principal (2) et à une positon adjacente à son extrémité, il est disposé une plaque de Bakélite en forme de came (16a), pour ledit bouton (16), il est prévu un cylindre (16b) relié avec la plaque Bakélite (16a) et une tige excentrique (16c) montée sur le cylindre (16b) avec décalage; à une extrémité de ladite plaque de commande (15), il est prévu un trou elliptique (15a) et à l'autre extrémité, il est prévu une portion protubérante (15b) qui s'engage avec la protubérance (14b) prévue à l'arrière de ladite plaque de broyage (14), ledit cylindre (16b) du bouton (16) est passé dans le trou elliptique (15a) de ladite plaque de commande (15), et ladite tige excentrique (16c) est montée dans la positon imposée sur le corps principal (2).

5. Moulin à poivre (1) tel que défini dans la revendication 1, **caractérisé en ce que** ledit couvercle de dessus (6) présente une extrémité de queue avec une partie collée et peut être basculé.

6. Moulin à poivre (1) tel que défini dans la revendication 1, **caractérisé en ce que** ledit corps principal (2) est constitué par deux moitiés identiques de corps qui sont fixées ensemble par des moyens de fixations.

7. Moulin à poivre (1) tel que défini dans la revendication 1, **caractérisé en ce que** au fond de la dite plaque de Bakélite (11), il est prévu une pluralité de portions protubérantes (15b) qui pourraient être insérées dans des trous de logement correspondants dans le corps principal (2).

8. Moulin à poivre (1) tel que défini dans la revendication 1, **caractérisé en ce que** ledit engrenage moteur (13) est sectoral.
